# FASCICULE DE BREVET EUROPEEN

(11) **EP 2 217 648 B1**
(45) Date de publication et mention de la délivrance du brevet: **18.01.2012**
(21) Numéro de dépôt: 08872324.2
(22) Date de dépôt: 25.11.2008
(51) Int. Cl.: C08K 5/16, C08L 95/00, C10C 3/02, C08K 5/3445, C08K 5/21, C08K 5/205, C08J 3/24, C09D 195/00, C04B 26/26, E01C 7/18, E04B 1/66

(54) **COMPOSITION BITUMINEUSE ELASTIQUE RETICULEE DE MANIERE THERMOREVERSIBLE**
WÄRMEUMKEHRBARE, VERNETZTE UND ELASTISCHE BITUMENZUSAMMENSETZUNG
THERMOREVERSIBLY CROSSLINKED ELASTIC BITUMINOUS COMPOSITION

(30) Priorité: 27.11.2007 FR 0708275
(43) Date de publication de la demande: 18.08.2010
(73) Titulaire: Total Raffinage Marketing, 92800 Puteaux (FR); UNIVERSITE PIERRE ET MARIE CURIE (PARIS 6), 75252 Paris Cedex 05 (FR)
(72) Inventeur: CHAVEROT Pierre, F-42800 Saint Croix En Jarez (FR); DREESSEN Sylvia, F-69360 SOLAIZE (FR); BOUTEILLER Laurent, F-92340 Bourg La Reine (FR); BUGNET Emmanuelle, F-94220 Charenton-Le-Pont (FR)
(74) Mandataire: Hirsch & Associés
(86) Numéro de dépôt international: PCT/FR2008/001636
(87) Numéro de publication internationale: WO 2009/101275

(56) Documents cités:
- EP-A- 0 416 682
- WO-A-2006/087475
- FR-A- 2 525 618
- FR-A- 2 536 081
- TERECH P ET AL: "LOW MOLECULAR MASS GELATORS OF ORGANIC LIQUIDS AND THE PROPERTIES OF THEIR GELS" CHEMICAL REVIEWS, ACS,WASHINGTON, DC, US, vol. 97, 1997, pages 3133-3159, XP002127859 ISSN: 0009-2665

## Description

### DOMAINE TECHNIQUE

La présente invention appartient au domaine des bitumes. Plus spécifiquement, elle concerne des compositions bitumineuses comprenant des molécules organogélatrices. Les compositions bitumineuses réticulées de manière thermoréversible, sont dures et élastiques aux températures d'usage et présentent une viscosité réduite aux températures d'application.

L'invention concerne également l'utilisation de ces compositions bitumineuses dans les domaines des applications routières, notamment dans la fabrication de liants routiers, et dans les domaines des applications industrielles. L'invention concerne aussi le procédé de préparation de ces compositions bitumineuses.

### CONTEXTE TECHNIQUE

L'utilisation du bitume dans la fabrication de matériaux pour applications routières et industrielles est connue de longue date : le bitume est le principal liant hydrocarboné utilisé dans le domaine de la construction routière ou du génie civil. Pour pouvoir être utilisé comme liant dans ces différentes applications, le bitume doit présenter certaines propriétés physico-chimiques et mécaniques. Il doit notamment être suffisamment dur aux températures d'usage pour éviter par exemple la formation d'ornières provoquée par le trafic. Le bitume doit aussi être élastique pour résister aux déformations imposées par le trafic et/ou les changements de température, phénomènes qui conduisent aux fissurations des enrobés ou à l'arrachement des granulats superficiels. Enfin, le bitume doit être suffisamment fluide à des températures d'application les moins élevées possibles pour permettre un bon enrobage des granulats et la mise en place de l'enrobé sur la route ainsi que son compactage avec les moyens techniques actuels de la profession routière. La mise en oeuvre d'un liant bitumineux nécessite donc de conjuguer à la fois la dureté et l'élasticité du bitume aux températures d'usage et une faible viscosité aux températures d'application. Le bitume seul n'étant en général pas assez élastique, on ajoute au bitume des polymères qui peuvent être éventuellement réticulés. Ces polymères réticulés apportent aux compositions bitumineuses des propriétés élastiques nettement améliorées. Cependant, la réticulation est irréversible ; une fois la réticulation effectuée, il n'est pas possible de revenir à l'état initial existant avant la réaction de réticulation. Les compositions bitumineuses réticulées ont ainsi de bonnes propriétés élastiques, mais la viscosité de celles-ci est très élevée. En effet on ne peut obtenir à la fois une bonne élasticité et une composition fluide avec des polymères réticulés de manière irréversible. Les propriétés mécaniques dont l'élasticité, sont favorisées par une réticulation des polymères alors que la fluidité est favorisée par une absence de réticulation ou une faible réticulation des polymères. Suivant les applications visées, il est nécessaire de trouver le bon compromis entre les propriétés mécaniques dont l'élasticité et la fluidité en jouant sur le taux de réticulation ou la nature de la réticulation.

### ART ANTERIEUR

Les réticulations selon l'art antérieur sont la plupart du temps, des réticulations irréversibles basées sur la formation de liaisons covalentes entre les polymères. Ainsi une des réticulations les plus utilisées dans le domaine des bitumes est la réticulation au soufre ou vulcanisation. Dans la réticulation au soufre, des chaînes plus ou moins courtes de soufre (en général de 8 à 2 atomes de soufre) lient de manière covalente les polymères. En jouant sur la nature chimique du donneur de soufre et/ou du polymère, sur la température, sur la concentration du polymère et/ou des donneurs de soufre, la société demanderesse a ainsi développé et breveté un grand nombre de compositions bitumineuses réticulées ayant des propriétés nettement améliorées par rapport au bitume sans polymères et par rapport au mélange physique bitume/polymère non réticulé. Parmi les brevets de la société demanderesse, on peut notamment citer les références suivantes : FR2376188, FR2429241, EP0799280, EP0690892.

Récemment, la société demanderesse dans deux demandes de brevet non publiées, a développé un nouveau mode de réticulation réversible de polymères, basé sur l'utilisation de polymères greffés s'associant aux températures d'usage via de longs domaines paraffiniques, l'association disparaissant aux températures d'application.

### OBJECTIFS DE L'INVENTION

Dans ces circonstances, l'objectif de la présente invention est de proposer de nouvelles compositions bitumineuses réticulées de manière thermoréversible.

Un autre objectif de l'invention est de proposer des compositions bitumineuses présentant aux températures d'usage les propriétés des compositions bitumineuses réticulées de manière irréversible au niveau de l'élasticité et de la dureté et présentant aux températures d'application, une viscosité réduite.

Un autre objectif de l'invention est de proposer un procédé simple de préparation de compositions bitumineuses réticulées de manière thermoréversible.

### BREVE DESCRIPTION

L'invention vise une composition bitumineuse comprenant au moins un bitume et au moins une molécule organogélatrice prise seule ou en mélange, ladite molécule organogélatrice étant représentée par la formule générale suivante (I) : 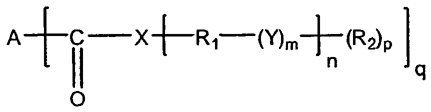 où:
- A représente un groupe hydrocarboné linéaire ou ramifié, saturé ou insaturé, acyclique, cyclique ou polycyclique, de 3 à 92 atomes de carbones, issu de la polymérisation des chaînes latérales d'au moins un acide gras insaturé,
- X représente un groupe NH ou un atome d'oxygène O,
- R₁ représente un groupe choisi parmi : un groupe hydrocarboné linéaire ou ramifié de 2 à 40 atomes de carbone, comprenant éventuellement un ou plusieurs hétéroatomes et comprenant éventuellement une ou plusieurs insaturations, ou un groupe aromatique substitué ou non,
- R₂ représente un groupe choisi parmi : un atome d'hydrogène, un groupe hydrocarboné linéaire ou ramifié de 1 à 40 atomes de carbone, comprenant un ou plusieurs hétéroatomes et comprenant éventuellement une ou plusieurs insaturations, ou un groupe aromatique substitué ou non,
- m et n représentent indépendamment l'un de l'autre un nombre entier variant de 1 à 4,
- p représente un nombre entier variant de 0 à 4,
- q représente un nombre entier variant de 1 à 4 ou une combinaison de ces valeurs,
- Y représente un groupe comprenant un donneur de liaison hydrogène tel que le groupement NH et un accepteur de liaison hydrogène tel que le groupement C=O.

De préférence, Y représente un groupe choisi parmi les groupes urée NHCONH-, amide -NHCO-, uréthane -OCONH- ou urée de formule générale (II) : 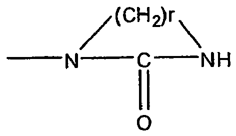 avec r un nombre entier ayant une valeur de 2 ou 3, p ayant une valeur de 0 et n ayant une valeur de 1.

De préférence, les acides gras insaturés sont des acides gras insaturés de 4 à 24 atomes de carbones (C₄ à C₂₄), de préférence de 11 à 22 atomes de carbones (C₁₁ à C₂₂), de préférence de 16 à 18 atomes de carbones (C₁₆ à C₁₈).

Plus préférentiellement, les acides gras insaturés sont des acides gras insaturés de 18 atomes de carbones en C₁₈, en particulier choisis parmi l'acide oléique, l'acide linoléique, l'acide linolénique pris seul ou en mélange.

De préférence, la molécule organogélatrice de formule générale (I) est sous forme d'un mélange de plus de 70% de molécules organogélatrices de formule générale (I) avec q = 2 et/ou q=3.

De préférence, le groupement R₁ et/ou R₂ représente un groupe aromatique substitué par des groupes alkyles et/ou des groupes alkoxy.

Dans un mode de réalisation préféré, Y représente un groupe urée -NHCONH-, de préférence avec n ayant une valeur de 1, m et p ayant une valeur de 1 ou m et p ayant une valeur de 2.

Dans un autre mode de réalisation préféré, Y représente un groupe urée de formule générale (II) : 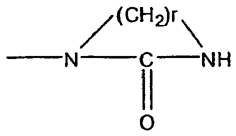 avec r un nombre entier ayant une valeur de 2 ou 3, p ayant une valeur de 0 et n ayant une valeur de 1, de préférence avec m ayant une valeur de 1, de préférence avec X représentant un groupe NH.

Dans un autre mode de réalisation préféré, Y représente un groupe amide -CONH-, de préférence avec m et p ayant une valeur de 1, de préférence avec X représentant un groupe NH.

Dans un autre mode de réalisation préféré, Y représente un groupe uréthane -OCONH-, de préférence avec m, n et p ayant une valeur de 1, de préférence avec X représentant un groupe NH.

La composition bitumineuse selon l'invention comprend de 0,1 à 30% en masse de molécule organogélatrice de formule générale (I), de préférence de 0,5 à 20%, de préférence de 1 à 10%, de préférence de 2 à 5%.

De préférence, la composition bitumineuse comprend en outre au moins un polymère et/ou un fluxant.

De préférence, le bitume est choisi parmi les bitumes d'origine naturelle, parmi les bitumes issus du raffinage du pétrole brut tels que les résidus de distillation atmosphérique, les résidus de distillation sous vide, les résidus viscoréduits, les résidus soufflés, leurs mélanges et leurs combinaisons ou parmi les bitumes synthétiques.

L'invention concerne en outre l'utilisation d'une composition bitumineuse pour fabriquer un liant bitumineux anhydre ou sous forme d'émulsion, un bitume polymère, ou un bitume fluxé.

L'invention concerne aussi l'utilisation d'une composition bitumineuse en mélange avec des granulats pour fabriquer un enduit superficiel, un enrobé à chaud, un enrobé à froid, un enrobé coulé à froid, une grave émulsion ou une couche de roulement.

L'invention concerne également l'utilisation d'une composition bitumineuse pour fabriquer un revêtement d'étanchéité, une membrane ou une couche d'imprégnation.

L'invention concerne enfin l'utilisation d'au moins une molécule organogélatrice de formule générale (I) prise seule ou en mélange pour préparer des compositions bitumineuses élastiques réticulées de manière thermoréversible.

L'invention vise enfin un procédé pour obtenir une composition bitumineuse, dans lequel la molécule organogélatrice de formule générale (I) prise seule ou en mélange est introduite à chaud à des températures entre 70 et 220°C, de préférence entre 90 à 180°C, dans le bitume seul, dans le bitume polymère, dans le liant bitumineux sous forme anhydre ou sous forme d'émulsion, ou dans l'enrobé.

L'invention vise aussi un procédé de préparation d'une composition bitumineuse dans lequel:
a) on introduit un bitume dans un récipient équipé de moyens de mélange, et on porte le bitume à une température entre 70 et 220°C, de préférence entre 90 et 180°C,
b) on introduit de 0,1 à 30 %, de préférence de 0,5 à 5 % en masse de molécule organogélatrice de formule générale (I) prise seule ou en mélange par rapport à la masse de bitume,
c) on chauffe la composition bitumineuse à une température comprise entre 70 et 220°C, de préférence entre 90 et 180°C, sous agitation, jusqu'à l'obtention d'une composition bitumineuse homogène.

### DESCRIPTION DETAILLEE

Les molécules organogélatrices selon l'invention sont représentées par la formule générale (I) suivante : 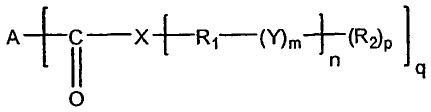 où :
- A représente un groupe hydrocarboné linéaire ou ramifié, saturé ou insaturé, acyclique, cyclique ou polycyclique, de 3 à 92 atomes de carbones, issu de la polymérisation des chaînes latérales d'au moins un acide gras insaturé,
- X représente un groupe NH ou un atome d'oxygène O,
- R₁ représente un groupe choisi parmi : un groupe hydrocarboné linéaire ou ramifié de 2 à 40 atomes de carbones, comprenant éventuellement un ou plusieurs hétéroatomes et comprenant éventuellement une ou plusieurs insaturations, ou un groupe aromatique substitué ou non,
- R₂ représente un groupe choisi parmi : un atome d'hydrogène, un groupe hydrocarboné linéaire ou ramifié de 1 à 40 atomes de carbones, comprenant un ou plusieurs hétéroatomes et comprenant éventuellement une ou plusieurs insaturations, ou un groupe aromatique substitué ou non,
- m et n représentent indépendamment l'un de l'autre un nombre entier variant de 1 à 4,
- p représente un nombre entier variant de 0 à 4,
- q représente un nombre entier variant de 1 à 4 ou une combinaison de ces valeurs,
- Y représente un groupe comprenant un donneur de liaison hydrogène tel que le groupement NH et un accepteur de liaison hydrogène tel que le groupement C=O.

Le groupe A selon l'invention est issu de la polymérisation des chaînes latérales d'au moins un acide gras insaturé. Les acides gras insaturés utilisés sont des acides gras insaturés de 4 à 24 atomes de carbones (C₄ à C₂₄), de préférence de 11 à 22 atomes de carbones (C₁₁ à C₂₂), de préférence de 16 à 18 atomes de carbones (C₁₆ à C₁₈). Parmi les acides gras insaturés utilisés, on peut citer par exemple, l'acide crotonique (C₄), l'acide iso-crotonique (C₄), l'acide undécylénique (C₁₁), l'acide hypogéïque (C₁₆), l'acide palmitoléïque (C₁₆), l'acide oléique (C₁₈), l'acide élaïdique (C₁₈), l'acide vaccénique (C₁₈), l'acide pétrosélinique (C₁₈), l'acide gadoléique (C₂₀), l'acide gondoïque (C₂₀), l'acide cétoléique (C₂₂), l'acide érucidique (C₂₂), l'acide brassidique (C₂₂), l'acide nervonique (C₂₄), l'acide tiglique (C₅), l'acide sorbique (C₆), l'acide linoléique (C₁₈), l'acide hiragonique (C₁₆), l'acide linolénique (C₁₈), l'acide γ-linolénique (C₁₈), l'acide eléostéarique (C₁₈), l'acide parinarique (C₁₈), homo-γ-linolénique (C₂₀), l'acide arachidonique (C₂₀), l'acide clupanodonique (C₂₂) pris seuls ou en mélanges.

De préférence, les acides gras insaturés sont des acides gras insaturés de 18 atomes de carbone en C₁₈, en particulier choisis parmi l'acide oléique, l'acide linoléique, l'acide linolénique pris seuls ou en mélange.

On peut aussi polymériser les acides provenant du TOFA ou Tall Oil Fatty Acid (riche en acides oléiques et acides linoléiques) et polymériser les acides gras qu'il contient.

Il est possible de polymériser un mélange contenant le même acide gras ou un mélange contenant plusieurs acides gras différents.

La réaction permettant de polymériser les chaînes des acides gras est une réaction de Diels-Alder (pour plus d'informations voir Kirk Othmer Encyclopedia of Chemical Technology, Vol 7, p. 768 ou « The dimer acids », Humko Sheffield, 1975).
La réaction de polymérisation est une réaction de dimérisation, trimérisation ou tétramérisation dans lesquelles on obtient respectivement des dimères d'acides gras (ou dimères diacides), des trimères d'acides gras (ou trimères triacides) ou des tétramères d'acides gras (ou tétramères tétracides). Des traces d'acides gras n'ayant pas réagit peuvent aussi être présentes.

Suivant les conditions expérimentales utilisées, on obtient donc un mélange contenant des acides gras qui n'ont pas réagit (A-(COOH)q avec q = 1), ou des dimères d'acides gras (A-(COOH)q avec q = 2), ou des trimères d'acides gras (A-(COOH)q avec q = 3), ou des tétramères d'acides gras (A-(COOH)q avec q = 4) à des concentrations différentes, A ayant la signification donnée précédemment. Les molécules organogélatrices de formule générale (I) obtenues par cette réaction de polymérisation, sont donc sous forme d'un mélange où coexistent des molécules organogélatrices de formule générale (I) où l'entier q a une valeur de 1, 2, 3 et/ou 4. Le produit de réaction comprend majoritairement des dimères d'acides gras (q = 2) et des trimères d'acides gras (q = 3), les acides gras n'ayant pas réagit (q = 1) ou les tétramères d'acides gras (q = 4) étant des produits minoritaires. Selon un mode de réalisation préféré, les molécules organogélatrices de formule générale (I) sont donc sous forme d'un mélange de plus de 70% de molécules organogélatrices de formule générale (I) avec q = 2 et/ou q = 3, c'est-à-dire que la réaction de polymérisation conduit à plus de 70% d'un mélange de dimère d'acides gras et/ou de trimère d'acide gras. Plus préférentiellement, les molécules organogélatrices de formule générale (I) sont sous forme d'un mélange de plus de 80% de molécules organogélatrices de formule générale (I) avec q = 2 et/ou q = 3.

Les produits de réaction sont sous forme de composés acycliques (linéaires ou ramifiés), de composés cycliques ou de composés polycycliques (en particulier bicycliques).

Lorsqu'il reste des acides gras n'ayant pas réagit (A-(COOH)_{q} avec q = 1), le groupe A est un groupe hydrocarboné acyclique linéaire, de 3 à 23 atomes de carbones (acides gras en C₄ à C₂₄), de préférence de 15 à 21 atomes de carbones (acides gras en C₁₆ à C₂₂), de préférence de 17 à 19 atomes de carbones (acides gras en C₁₈ à C₂₀).

Pour les dimères d'acides gras, les trimères d'acides gras et les tétramères d'acides gras, le groupe A est un groupe hydrocarboné acyclique ramifié ou cyclique ou polycyclique.

Pour les dimères d'acides gras, le groupe A est un groupe hydrocarboné acyclique ramifié ou cyclique ou polycyclique de 6 à 46 atomes de carbones (dimères d'acides gras en C₄ à C₂₄), de préférence de 30 à 42 atomes de carbones (dimères d'acides gras en C₁₆ à C₂₂), de préférence de 34 à 38 atomes de carbones (dimères d'acides gras en C₁₈ à C₂₀).

Pour les trimères d'acides gras, le groupe A est un groupe hydrocarboné acyclique ramifié ou cyclique ou polycyclique de 9 à 69 atomes de carbones (trimères d'acides gras en C₄ à C₂₄), de préférence de 45 à 63 atomes de carbones (trimères d'acides gras en C₁₆ à C₂₂), de préférence de 51 à 57 atomes de carbones (trimères d'acides gras en C₁₈ à C₂₀).

Pour les tétramères d'acides gras, le groupe A est un groupe hydrocarboné acyclique ramifié ou cyclique ou polycyclique de 12 à 92 atomes de carbones (tétramères d'acides gras en C₄ à C₂₄), de préférence de 60 à 84 atomes de carbones (tétramères d'acides gras en C₁₆ à C₂₂), de préférence de 68 à 76 atomes de carbones (tétramères d'acides gras en C₁₈ à C₂₀).

Le groupe A est un groupe saturé quand la réaction de polymérisation est suivie d'une réaction d'hydrogénation sélective des doubles liaisons.

A titre d'exemple, à partir d'acide linoléique, ou d'acide oléique ou de Tall Oil Fatty Acid, comprenant majoritairement des acides gras de 18 atomes de carbones en C₁₈, on peut obtenir un mélange comprenant les dimères d'acides suivants (A-(COOH)q avec q = 2): 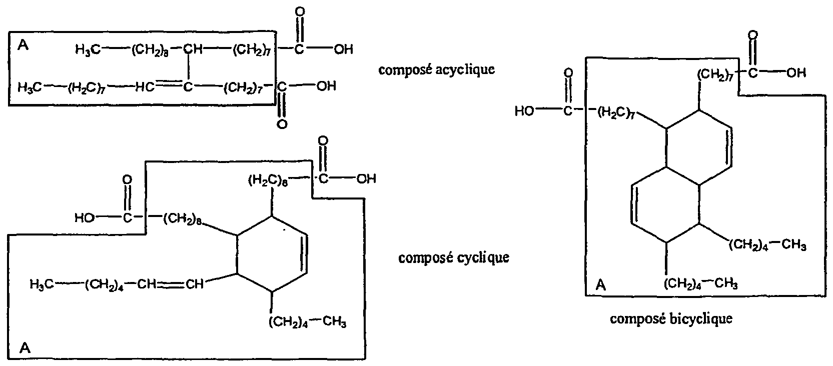 Les trois composés A-(COOH)₂ ci-dessus possèdent deux fonctions acides et le groupe A selon l'invention.
Dans l'exemple ci-dessus, le groupe A peut se présenter sous trois formes :
- dans le composé acyclique, A est un groupe hydrocarboné, ramifié, insaturé, de 34 atomes de carbones,
- dans le composé cyclique, A est un groupe hydrocarboné, cyclique, insaturé, de 34 atomes de carbones,
- dans le composé bicyclique, A est un groupe hydrocarboné, polycyclique, insaturé, de 34 atomes de carbones.

La molécule organogélatrice est donc sous forme d'un mélange au niveau de l'entier q (mélange de dimères d'acides gras et/ou de trimères d'acides gras par exemple) et aussi sous les différentes formes chimiques que peut revêtir un dimère d'acide gras (mélange de composés cycliques ou bicycliques par exemple).
Parmi les acides gras polymérisés disponibles commercialement, on peut citer les PRIPOL^{®} commercialisés par Unichema, les POLYMERGIN^{®} commercialisés par HARBURGER BRINCKMAN & MERGELL GmbH, les DIMER^{®} commercialisés par Westvaco, les EMPOL^{®} commercialisés par Cognis.
Par exemple, l'EMPOL 1008^{®} comprend 3.5% d'acide gras en C₁₈ n'ayant pas réagit (q = 1), 92.3% de dimère d'acide gras en C₃₆ (q = 2) et 3.5% de trimère d'acide gras en C₅₄ (q = 3). De plus, dans l'EMPOL 1008^{®}, les doubles liaisons sont totalement hydrogénées.
Par exemple, l'EMPOL 1018^{®} comprend 4% d'acide gras n'ayant pas réagit (q = 1), 79% de dimère d'acide gras (q = 2) et 17% de trimère d'acide gras (q = 3).
Par exemple, l'EMPOL 1040^{®} comprend 20% de dimère d'acide gras (q = 2) en C₃₆ et 80% de trimère d'acide gras (q = 3) en C₅₄.
Par exemple, l'EMPOL 1041^{®} comprend 10% de dimère d'acide gras (q = 2) en C₃₆ et 90% de trimère d'acide gras (q = 3) en C₅₄.
Par exemple, l'EMPOL 1054^{®} comprend 4% d'acide gras en C₁₈ n'ayant pas réagit (q = 1), 55% de dimère d'acide gras (q = 2) en C₃₆ et 35% de trimère d'acide gras (q = 3) en C₅₄.
Par exemple, le PRIPOL 1045^{®} comprend 10% de dimère d'acide gras (q = 2) en C₃₆ et 90% de trimère d'acide gras (q = 3) en C₅₄.

Les groupes A de part leur dissymétrie et leur irrégularité de structure présentent une cristallinité faible ou même nulle. De plus, de part la présence des nombreuses chaînes alkyles, ils possèdent une température de transition vitreuse Tg faible (proche de 20°C ou inférieure à 20°C). Cette faible température de transition vitreuse confère aux molécules (I) une certaine souplesse, elles sont capables de se déformer sans rupture. La combinaison des motifs A et des liaisons hydrogène apportées par les motifs Y, permet aux molécules (I) d'être déformables, mais de revenir après élongation à leur état initial (élasticité).

Le groupe Y des molécules de formule générale (I) comprend au moins un groupement donneur de liaison hydrogène et au moins un groupement accepteur de liaison hydrogène pouvant former des liaisons hydrogène. Le donneur de liaison hydrogène est par exemple un groupement NH et l'accepteur de liaison hydrogène est par exemple le groupement carbonyle C=O. On trouve les fonctions NH et C=O notamment dans les groupes urées, amides ou uréthanes. Le groupe Y est donc choisi parmi les groupes urée -NHCONH-, amide -NHCO-, uréthane -OCNH- ou urée de formule générale (II) : 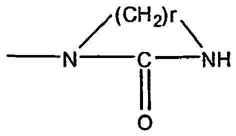 avec r un nombre entier ayant une valeur de 2 ou 3 et p ayant une valeur de 0.

Les groupes urée -NHCONH-, amide -NHCO-, uréthane -OCNH- ou urée de formule générale (II) du groupe Y permet aux molécules organogélatrices (I) de s'associer entre elles via un réseau de liaisons hydrogène. Aux températures d'usage (entre -20°C et +60°C) l'association des molécules organogélatrices (I) confère au bitume des propriétés améliorées au niveau de la dureté et de l'élasticité.

Lorsque la composition bitumineuse est chauffée aux températures d'application (entre +90°C et +180°C) les interactions entre molécules organogélatrices (I), disparaissent, et le bitume retrouve les propriétés d'un bitume non réticulé, la viscosité de la composition bitumineuse à chaud redevient celle du bitume de départ.
Ainsi, lorsqu'on additive un bitume avec les molécules organogélatrices (I) selon l'invention, on obtient des compositions bitumineuses qui sont réticulées de manière réversible et plus particulièrement de manière thermoréversible.
Par réticulation thermoréversible des compositions bitumineuses selon l'invention, on entend une réticulation qui se traduit par les phénomènes suivants :
- à basse température, par exemple aux températures d'usage, les molécules organogélatrices (I) sont associées entre elles via un réseau de liaisons hydrogènes obtenu grâce aux motifs Y. Le réseau supramoléculaire formé confère à la composition bitumineuse de bonnes propriétés mécaniques notamment au niveau de la dureté et de l'élasticité.
- à chaud, par exemple aux températures d'application, une augmentation de température provoque la rupture du réseau de liaisons hydrogènes et par conséquent la dissociation du réseau supramoléculaire. Le rapprochement des molécules organogélatrices (I) disparaît et la composition bitumineuse retrouve une viscosité faible et donc une bonne fluidité.
- une diminution de température, et un retour aux températures d'usage, permet au réseau de liaisons hydrogènes de se reformer. Le phénomène est thermoréversible.

Les groupes R₁ et R₂ représentent indépendamment l'un de l'autre un groupe hydrocarboné linéaire ou ramifié respectivement de 2 ou 1 atomes de carbones à 40 atomes de carbones, comprenant éventuellement un ou plusieurs hétéroatomes et comprenant éventuellement une ou plusieurs insaturations, ou un groupe aromatique substitué ou non. Le groupe R₂ étant en bout de chaîne peut de plus représenter un atome d'hydrogène, ce qui n'est pas le cas pour R₁.

De préférence les groupes R₁ et/ou R₂ sont des groupes linéaires, non saturés, de préférence de 2 à 24 atomes de carbones, de préférence de 5 à 18 atomes de carbones, plus préférentiellement de 6 à 12 atomes de carbones.

De préférence les groupes R₁ et/ou R₂ sont des groupes aromatiques non substitués. Quand R₁ et/ou R₂ représente un groupe aromatique substitué, le groupe aromatique est substitué par des groupes alkyles, de préférence des groupes méthyle, éthyle, propyle, butyle et/ou substitué par des groupes alkoxy, de préférence des groupes méthoxy, éthoxy, propoxy, butoxy.

Quand R₁ et/ou R₂ comprennent un ou plusieurs hétéroatomes, les hétéroatomes sont de préférence des atomes d'azote, plus préférentiellement R₁ et/ou R₂ comprennent un seul atome d'azote.

Dans un mode particulier de réalisation, le groupe Y représente un groupe urée NHCONH-, la formule générale (I) s'écrit de la manière suivante (Ia) : 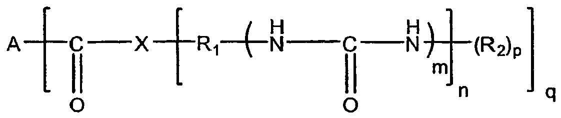 où les groupes A, R₁, R₂ et les nombres entiers m, n, p et q ont la même signification que précédemment.
De préférence, les nombres entiers m, n et p ont une valeur de 1, de préférence X représente un groupe NH, on utilise les molécules répondant à la formule (Ia₁) suivante : 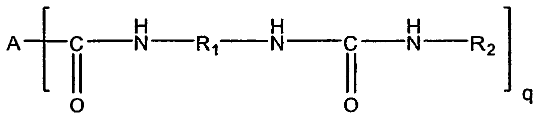 où les groupes A, R₁, R₂ et le nombre entier q ont la même signification que précédemment.
En particulier, les molécules (Ia₁) du tableau suivant sont utilisées :

| Molécule (Ia₁) | R₁ | R₂ |
|---|---|---|
| 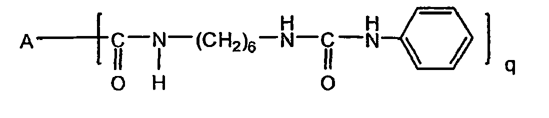 | (CH₂)₆ | phényle |
| 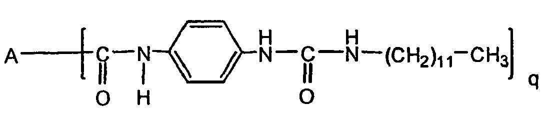 | phényle | (CH₂)₁₁-CH₃ |
| 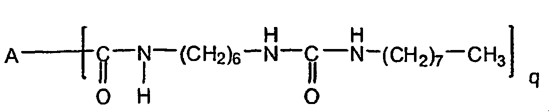 | (CH₂)₆. | (CH₂)₇-CH₃ |

Les molécules (Ia₁) sont synthétisées à partir d'un mélange commercial provenant de la polymérisation d'acides gras de formule générale (III) A-[COOH]q, le groupe A et le nombre entier q ont la même signification que précédemment. La ou les fonctions acides du composé de formule générale (III) réagissent d'abord avec une diamine de formule (IV) H₂N-R₁-NH₂. Les fonctions amines restantes réagissent ensuite avec un isocyanate de formule générale (V) O=C=N-R₂, les groupes R₁ et R₂ ont la même signification que précédemment.

De préférence, les nombres entiers m, n et p ont une valeur de 1, de préférence X représente un atome d'oxygène O, on utilise les molécules répondant à la formule (Ia₂) suivante : 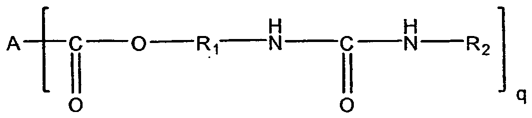 où les groupes A, R₁, R₂ et le nombre entier q ont la même signification que précédemment.
En particulier, les molécules (Ia₂) du tableau suivant sont utilisées :

| Molécule (Ia₂) | R₁ | R₂ |
|---|---|---|
| 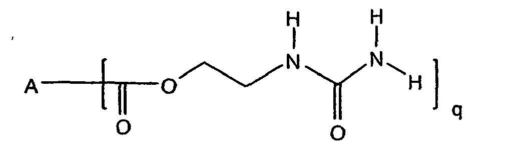 | (CH₂)₂ | H |
| 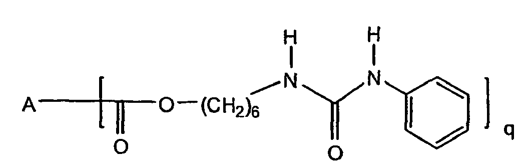 | (CH₂)₆ | phényle |

Les molécules (Ia₂) sont synthétisées à partir d'un mélange commercial provenant de la polymérisation d'acides gras de formule générale (III) A-[COOH]q, le groupe A et le nombre entier q ont la même signification que précédemment. La ou les fonctions acides du composé de formule générale (III) sont d'abord activées en chlorure d'acyle pour former A-[COCl]q qui réagit ensuite avec un composé de formule (VI) HO-R₁-NHCONH-R₂, les groupes R₁ et R₂ ont la même signification que précédemment.

De préférence, l'entier n a une valeur de 1, de préférence les entiers m et p ont une valeur de 2, de préférence X représente un groupe NH, on utilise les molécules répondant à la formule (Ia₃) suivante: 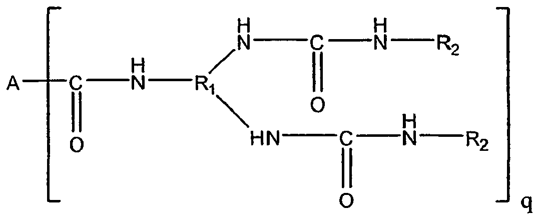 où les groupes A, R₁, R₂ et le nombre entier q ont la même signification que précédemment.
En particulier, les molécules (Ia₃) du tableau suivant sont utilisées :

| Molécule (Ia₃) | R₁ | R₂ |
|---|---|---|
| 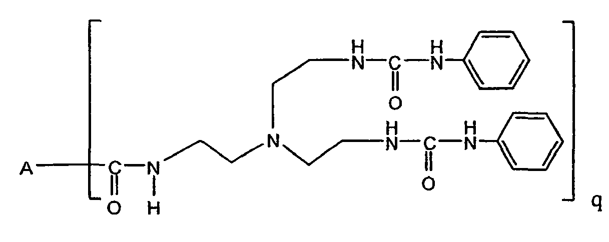 | ((CH₂)₂)₃-N | phényle |
| 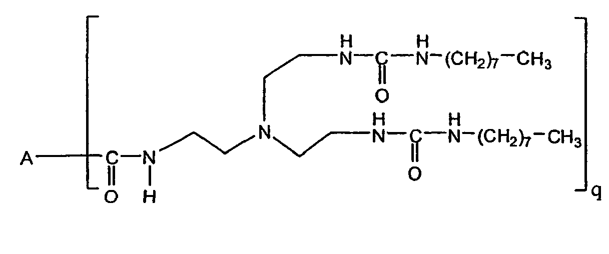 | ((CH₂)₂)₃-N | (CH₂)₇-CH₃ |

Les molécules (Ia₃) sont synthétisées à partir d'un mélange commercial provenant de la polymérisation d'acides gras de formule générale (III) A-[COOH]_{q}, le groupe A et le nombre entier q ont la même signification que précédemment. La ou les fonctions acides du composé de formule générale (III) réagissent d'abord avec une triamine de formule (VII) (H₂N)₃-R₁. Les fonctions amines restantes réagissent ensuite avec un isocyanate de formule générale (V) O=C=N-R₂, R₁ et R₂ ont la même signification que précédemment.

Dans un deuxième mode particulier de réalisation, le groupe Y représente un groupe urée de formule (II) : 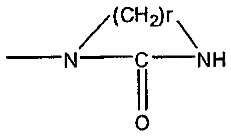 où r est un nombre entier ayant une valeur de 2 ou 3. Dans ce mode de réalisation, p a une valeur de 0 et n a une valeur de 1, la formule générale (I) s'écrit de la manière suivante (Ib) : 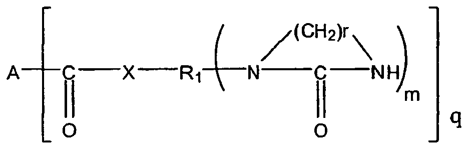 où les groupes A et R₁ et les nombres entiers m et q ont la même signification que précédemment.
De préférence, l'entier m a une valeur de 1, de préférence X représente un groupe NH, la formule générale (Ib) s'écrit de la manière suivante (Ib₁) : 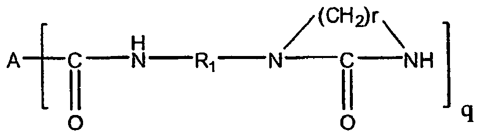 où les groupes A et R₁ et le nombre entier q ont la même signification que précédemment.

En particulier, les molécules (Ib₁) du tableau suivant sont utilisées :

| Molécule (Ib₁) | R₁ | r |
|---|---|---|
| 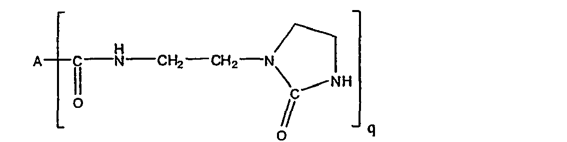 | (CH₂)₂ | 2 |
| 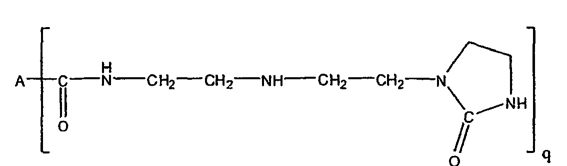 | (CH₂)₂-NH-(CH₂)₂ | 2 |

La préparation des molécules (Ib₁) est décrite dans la demande W02006087475. Parmi les molécules préférées de la sous-famille (Ib₁), on peut citer la molécule suivante (Ib₁-1), dans laquelle A est un groupe hydrocarboné cyclique saturé de 32 atomes de carbones qui provient de la dimérisation d'acides gras riches en acide linoléïque :

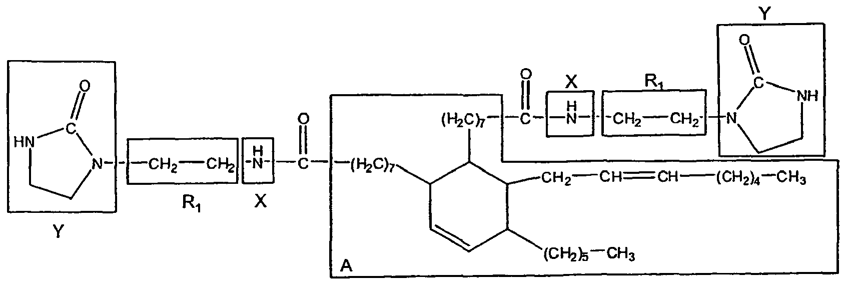

Dans un troisième mode particulier de réalisation, le groupe Y représente un groupe amide -CONH-, la formule générale (I) s'écrit de la manière suivante (Ic) : 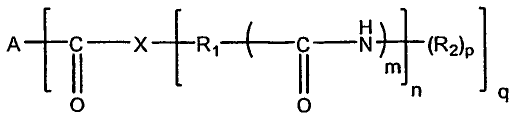 où les groupes A, R₁, R₂ et les nombres entiers m, n, p et q ont la même signification que précédemment.

De préférence, les entiers m et p ont une valeur de 1, de préférence X représente un groupe NH, la formule générale (Ic) s'écrit de la manière suivante (Ic₁) : 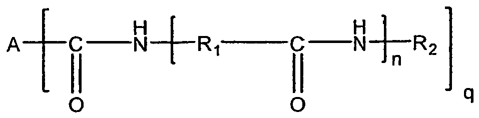 où les groupes A, R₁, R₂ et les nombres entiers n et q ont la même signification que précédemment.

En particulier, les molécules (Ic₁) du tableau suivant sont utilisées :

| Molécule (Ic₁) | n | R₁ | R₂ |
|---|---|---|---|
| 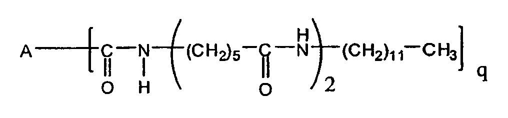 | 2 | (CH₂)₅ | (CH₂)₁₁-CH₃ |
| 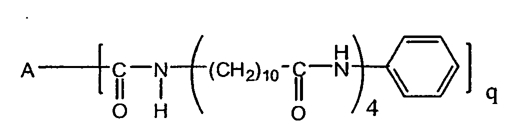 | 4 | (CH₂)₁₀ | phényle |

Les molécules (Ic₁) sont synthétisées à partir d'un mélange commercial provenant de la polymérisation d'acides gras de formule générale (III) A-[COOH]_{q}, le groupe A et le nombre entier q ont la même signification que précédemment. La ou les fonctions acides du composé de formule générale (III) réagissent avec un composé de formule (VIII) H_{z}N-(R₁-CONH)ₙ-R₂, les groupes R₁ et R₂ et le nombre entier n ont la même signification que précédemment.

Dans un dernier mode particulier de réalisation, le groupe Y représente un groupe uréthane -OCONH-, la formule générale (I) s'écrit de la manière suivante (Id) : 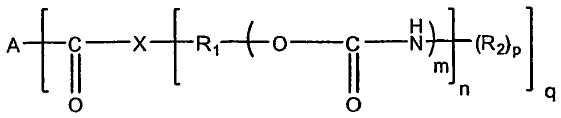 où les groupes A, R₁, R₂ et les nombres entiers m, n, p et q ont la même signification que précédemment.
De préférence, les entiers m, n et p ont une valeur de 1, de préférence X représente un groupe NH, on utilise les molécules répondant à la formule (Id₁) suivante : 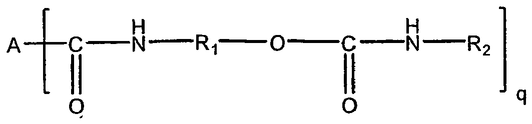 où les groupes A, R₁, R₂ et le nombre entier q ont la même signification que précédemment.

En particulier, les molécules (Id₁) du tableau suivant sont utilisées :

| Molécule (Id₁) | R₁ | R₂ |
|---|---|---|
| 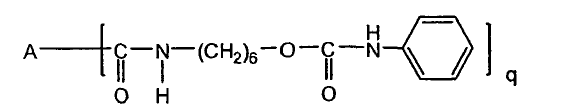 | (CH₂)₆ | phényle |
| 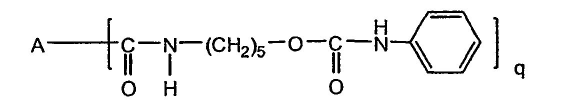 | (CH₂)₅ | phényle |
| 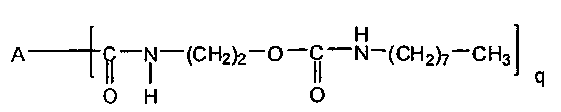 | (CH₂)₂ | (CH₂)₇-CH₃ |

Les molécules (Id₁) sont synthétisées à partir d'un mélange commercial provenant de la polymérisation d'acides gras de formule générale (III) A-[COOH]q, le groupe A et le nombre entier q ont la même signification que précédemment. La ou les fonctions acides du composé de formule générale (III) réagissent d'abord avec un composé de formule (IX) H₂N-R₁-OH. Les fonctions alcools restantes réagissent ensuite avec un isocyanate de formule générale (V) O=C=N-R₂, les groupes R₁ et R₂ ont la même signification que précédemment.

Selon l'invention, il est possible de combiner les différents mode de réalisation préférés et d'avoir par exemple des molécules de formule (Ia) en mélange avec des molécules de formule (Ib), ou en mélange avec des molécules de formule (Ic), ou en mélange avec des molécules de formule (Id).

Toujours selon l'invention, la synthèse chimique des molécules de formule générale (I), s'accompagne parfois de produits secondaires mais il n'est pas nécessaire de séparer les produits de formule générale (I), des produits de réaction secondaire, produits qui sont minoritaires.

Les compositions bitumineuses selon l'invention comprennent au moins un bitume et au moins une molécule organogélatrice de formule générale (I) prise seule ou en mélange. Les compositions bitumineuses selon l'invention comprennent de 0,1 à 30% en masse de molécule organogélatrice de formule générale (I) prise seule ou en mélange, de préférence de 0,5 à 20%, de préférence de 1 à 10%, de préférence de 2 à 5%.

Les compositions bitumineuses selon l'invention peuvent contenir des bitumes issus de différentes origines. On peut citer tout d'abord les bitumes d'origine naturelle, ceux contenus dans des gisements de bitume naturel, d'asphalte naturel ou les sables bitumineux.

Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Les bitumes utilisés peuvent également être des bitumes fluxés par addition de solvants volatils, de fluxants d'origine pétrolière, de fluxants carbochimiques et/ou de fluxants d'origine végétale.

On peut aussi utiliser des bitumes synthétiques également appelés bitumes clairs, pigmentables ou colorables. Ces bitumes contiennent peu ou pas d'asphaltènes et peuvent être par conséquent colorés. Ces bitumes synthétiques sont à base de résine de pétrole et/ou de résine issue de la pétrochimie telle que les cires de polyéthylène ou les résines indène-coumarone et d'huile lubrifiante comme décrit par exemple dans le brevet EP179510.

On peut également utiliser des bitumes polymères. Les polymères utilisés peuvent être par exemple des polyéthylènes, des copolymères d'éthylène et d'acétate de vinyle, des copolymères de styrène et de butadiène.

Diverses utilisations des compositions bitumineuse obtenues selon l'invention sont envisagées, notamment pour la préparation d'un liant bitumineux, lequel peut à son tour être employé pour préparer une association avec des granulats, notamment routiers. Un autre aspect de l'invention est l'utilisation d'une composition bitumineuse dans diverses applications industrielles, notamment pour préparer un revêtement d'étanchéité, une membrane ou une couche d'imprégnation.

S'agissant des applications routières, l'invention vise notamment des enrobés bitumineux comme matériaux pour la construction et l'entretien des corps de chaussée et de leur revêtement, ainsi que pour la réalisation de tous travaux de voiries. Ainsi, l'invention concerne par exemple les enduits superficiels, les enrobés à chaud, les enrobés à froid, les enrobés coulés à froid, les graves émulsions, les couches de bases, les couches de liaison, les couches d'accrochage et les couches de roulement, et d'autres associations d'un liant bitumineux et du granulat routier possédant des propriétés particulières, telles que les couches anti-omiérantes, les enrobés drainants, ou les asphaltes (mélange entre un liant bitumineux et des granulats du type du sable).

S'agissant des applications industrielles des compositions bitumineuses, on peut citer la fabrication de membranes d'étanchéité, de membranes anti-bruit, de membranes d'isolation, des revêtements de surface, des dalles de moquette, des couches d'imprégnation, etc.

L'invention vise également un procédé pour obtenir une composition bitumineuse dure et élastique aux températures d'usage sans augmenter sa viscosité à chaud.

Le procédé de préparation des compositions bitumineuses selon l'invention comprend les étapes essentielles suivantes :
a) on introduit un bitume dans un récipient équipé de moyens de mélange, et on porte le bitume à une température entre 70 et 220°C, de préférence entre 90 et 180°C,
b) on introduit de 0,1 à 30 %, de préférence de 0,5 à 5% en poids de molécule organogélatrice de formule générale (I),
c) on chauffe la composition à une température comprise entre 70 et 220°C, de préférence entre 90 et 180°C, sous agitation, jusqu'à l'obtention d'une composition bitumineuse homogène.

La molécule organogélatrice de formule générale (I) peut être introduite indifféremment dans le bitume seul, ou en cours de fabrication, dans le bitume polymère, dans le liant bitumineux sous forme anhydre ou sous forme d'émulsion, dans l'enrobé, mais toujours à chaud à des températures entre 70 et 220°C, de préférence entre 90 à 180°C. Les mélanges peuvent ensuite être agités à ces températures jusqu'à solubilisation de la molécule organogélatrice de formule générale (I) dans le bitume, le bitume polymère, le liant bitumineux sous forme anhydre ou d'émulsion, dans l'enrobé.

### EXEMPLES

### Composition bitumineuse T₁ (témoin)

On choisit un bitume de distillation directe de pénétrabilité 50 1/10 mm selon la norme NF EN 1426.

### Composition bitumineuse T₂ (témoin)

On prépare également une composition bitumineuse témoin dans laquelle le polymère est réticulé de manière irréversible.

On introduit dans un réacteur sous agitation et à 195°C:
- 95% en masse d'un bitume de distillation directe de pénétrabilité 50 1/10 mm et
- 5% en masse d'un copolymère séquencé styrène/butadiène, à 25% en poids de styrène et à 75% en poids de butadiène ayant une masse moléculaire en poids, Mw de 128 000 Dalton.
Le mélange est agité et chauffé à 195°C pendant environ 3 heures.
On ajoute ensuite 0.1% en masse de soufre.
Le mélange est agité et chauffé à 195°C pendant 1h.

### Compositions bitumineuses selon l'invention C₁, C₂, C₃, C₄, C₅

On prépare 5 compositions bitumineuses selon l'invention avec 3 molécules de formule générale (I).
1) Pour la composition C₁, on utilise la molécule (Ib₁-2) dont la formule est la suivante : 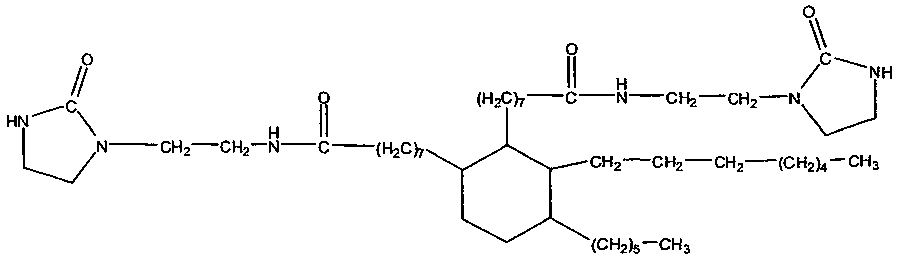 On prépare la molécule (Ib₁-2) comme décrit dans la demande WO2006087475 (pages 12 à 14).
   La concentration en molécule (Ib₁-2) dans la composition C₁ est de 0,5% en masse.
2) Pour la composition C₂, on utilise la même molécule (Ib₁-2) à une concentration de 2% en masse.
3) Pour la composition C₃, on utilise la même molécule (Ib₁-2) à une concentration de 5% en masse.
4) Pour la composition C₄, on utilise la molécule (Ia₁-1) dont la formule est la suivante 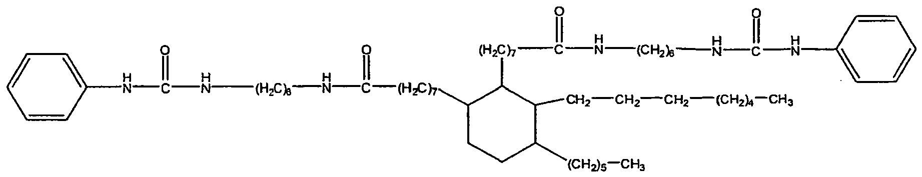 On prépare la molécule (Ia₁-1) de la manière suivante :
   Dans un réacteur, on mélange 51,5 g d'EMPOL 1008® (92.3% de dimère d'acide gras en C₃₆, q = 2, totalement hydrogéné) et 21,4 g d'hexaméthylène diamine. On chauffe à 160°C pendant 24 heures.
   Après refroidissement à température ambiante, on ajoute 70 mL de chloroforme, puis 20 mL de phénylisocyanate. On agite pendant 24 heures à température ambiante, puis on évapore le solvant.
   La concentration en molécule (Ia₁-1) dans la composition C₄ est de 5% en masse.
5) Pour la composition C₅, on utilise la molécule (Id₁-1) dont la formule est la suivante : 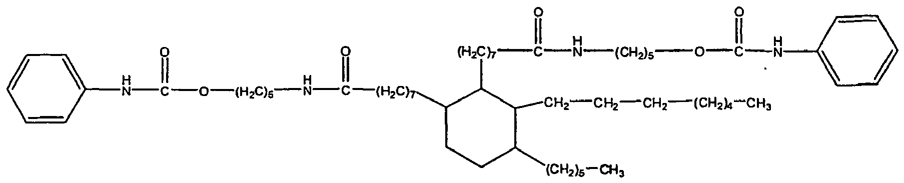 On prépare la molécule (Id₁-1) de la manière suivante :
   Dans un réacteur, on mélange 51,5 g d'EMPOL 1008® (92.3% de dimère d'acide gras en C₃₆, q = 2, totalement hydrogéné) et 19 g de 5-amino-1-pentanol. On chauffe à 160°C pendant 24 heures.
   Après refroidissement à 50°C, on ajoute 70 mL de chloroforme, 1 mL de triéthylamine, puis 20 mL de phénylisocyanate. On agite pendant 24 heures à reflux, puis on évapore le solvant.

La concentration en molécule (Id₁-1) dans la composition C₅ est de 5% en masse.

Les compositions bitumineuses selon l'invention C₁ à C₅ sont préparées de la manière suivante :
On introduit dans un réacteur sous agitation et à 170°C:
   - un bitume de distillation directe de pénétrabilité 50 1/10 mm et
   - la molécule de formule générale (I).
Le mélange est agité et chauffé à 170°C pendant environ 2 heures.

Le Tableau ci-après présente les caractéristiques physiques des compositions bitumineuses selon l'invention et des compositions bitumineuses témoins.

| | **T₁** | **T₂** | **C₁** | **C₂** | **C₃** | **C₄** | **C₅** |
|---|---|---|---|---|---|---|---|
| Pénétrabilité(0,1 mm)⁽¹⁾ | 46 | 43 | 46 | 45 | 41 | 39 | 42 |
| TBA (°C) ⁽²⁾ | 50.2 | 61.6 | 51.4 | 53.7 | 65.0 | 62 | 59 |
| Viscosité à 80°C (Pa.s) | 28.4 | 59.0 | 29.3 | 31.5 | 55.0 | 57.0 | 39.9 |
| Viscosité à 100°C (Pa.s) | 5.3 | 14.9 | 5.8 | 7.6 | 8.3 | 10.0 | 8.0 |
| Viscosité à 120°C (Pa.s) | 1.3 | 4.3 | 1.5 | 1.8 | 2.1 | 2.5 | 1.9 |
| Viscosité à 140°C (Pa.s) | 0.5 | 1.5 | 0.5 | 1.6 | 0.9 | 1.0 | 0.8 |
| Viscosité à 160°C (Pa.s) | 0.2 | 0.6 | 0.3 | 0.5 | 0.5 | 0.4 | 0.3 |
| Viscosité à 180°C (Pa.s) | 0.1 | 0.4 | 0.2 | 0.2 | 0.1 | 0.2 | 0.2 |
| Viscosité à 200°C (Pa.s) | 0.1 | 0.2 | 0.2 | 0.2 | 0.1 | 0.2 | 0.1 |
| Elongation max. à 5°C (%)⁽³⁾ | 38 | 697 | 75 | 100 | 589 | >700 | 322 |
| Energie conventionnelle à 400 % d'élongation (J/cm²)⁽³⁾ | 0 | 17.5 | 0 | 0 | 12.7 | 13.8 | 3.7 |

| | | | | | | | |
|---|---|---|---|---|---|---|---|
| ⁽¹⁾ Selon la norme NF EN 1426. ⁽²⁾ Température Bille et Anneau, selon la norme NF EN 1427. ⁽³⁾ Test de traction à 5°C, selon la norme NF EN 13587, avec une vitesse d'étirement de 500 mm/min. | | | | | | | |

Le bitume seul T₁ n'est pas du tout élastique. Lorsque le bitume est additivé avec un polymère réticulé au soufre (réticulation irréversible), la composition T₂ présente une très bonne capacité d'élongation et une cohésion, mesurée par l'énergie conventionnelle, très nettement supérieure à celle du bitume seul T₁ ; la composition T₂ est élastique. La composition T₂ présente cependant des valeurs de viscosités bien plus élevées que celles du bitume seul, ceci étant du à la réticulation irréversible du polymère.

Les compositions selon l'invention et en particulier les compositions C₃ et C₄ présentent des propriétés élastiques significatives à 5°C, propriétés proches et même supérieures à celles de la composition T₂. De plus, il apparaît que les compositions selon l'invention présentent des viscosités relativement réduites, assez proches de celles du bitume pur T₁, dès que la température dépasse 100°C. Les viscosités des compositions selon l'invention sont très nettement inférieures à celles de la composition T₂ dans laquelle la réticulation est irréversible. Les compositions selon l'invention sont donc suffisamment fluides aux températures d'application permettant ainsi un bon enrobage des granulats et une mise en place des enrobés sur la route plus aisée avec les moyens techniques actuels de la profession routière. De plus les compositions selon l'invention aux températures d'usage, sont suffisamment élastiques pour résister aux déformations imposées par le trafic et/ou les changements de température.

## Revendications

1. Composition bitumineuse comprenant au moins un bitume et au moins une molécule organogélatrice prise seule ou en mélange, ladite molécule organogélatrice étant représentée par la formule générale suivante (I) : 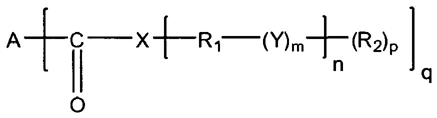 où :
- A représente un groupe hydrocarboné linéaire ou ramifié, saturé ou insaturé, acyclique, cyclique ou polycyclique, de 3 à 92 atomes de carbones, issu de la polymérisation des chaînes latérales d'au moins un acide gras insaturé,
- X représente un groupe NH ou un atome d'oxygène O,
- R₁ représente un groupe choisi parmi : un groupe hydrocarboné linéaire ou ramifié de 2 à 40 atomes de carbones, comprenant éventuellement un ou plusieurs hétéroatomes et comprenant éventuellement une ou plusieurs insaturations, ou un groupe aromatique substitué ou non,
- R₂ représente un groupe choisi parmi : un atome d'hydrogène, un groupe hydrocarboné linéaire ou ramifié de 1 à 40 atomes de carbones, comprenant un ou plusieurs hétéroatomes et comprenant éventuellement une ou plusieurs insaturations, ou un groupe aromatique substitué ou non,
- m et n représentent indépendamment l'un de l'autre un nombre entier variant de 1 à 4,
- p représente un nombre entier variant de 0 à 4,
- q représente un nombre entier variant de 1 à 4 ou une combinaison de ces valeurs,
- Y représente un groupe comprenant un donneur de liaison hydrogène tel que le groupement NH et un accepteur de liaison hydrogène tel que le groupement C=O.

2. Composition bitumineuse selon la revendication 1 dans laquelle Y représente un groupe choisi parmi les groupes urée -NHCONH-, amide -NHCO-, uréthane -OCONH- ou urée de formule générale (II) : 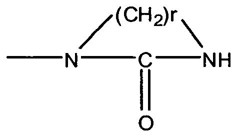 avec r un nombre entier ayant une valeur de 2 ou 3 et p ayant une valeur de 0 et n ayant une valeur de 1.

3. Composition bitumineuse selon la revendication 1 ou 2 dans laquelle les acides gras insaturés sont des acides gras insaturés de 4 à 24 atomes de carbones (C₄ à C₂₄), de préférence de 11 à 22 atomes de carbones (C₁₁ à C₂₂), de préférence de 16 à 18 atomes de carbones (C₁₆ à C₁₈).

4. Composition bitumineuse selon l'une quelconque des revendications 1 à 3 dans laquelle la molécule organogélatrice de formule générale (I) est sous forme d'un mélange de plus de 70% de molécules organogélatrices de formule générale (I) avec q = 2 et/ou q=3.

5. Composition bitumineuse selon l'une quelconque des revendications 1 à 4 dans laquelle le groupement R₁ et/ou R₂ représente un groupe aromatique substitué par des groupes alkyles et/ou des groupes alkoxy.

6. Composition bitumineuse selon l'une quelconque des revendications 1 à 5 dans laquelle Y représente un groupe urée -NHCONH-, de préférence avec n ayant une valeur de 1, m et p ayant une valeur de 1 ou m et p ayant une valeur de 2.

7. Composition bitumineuse selon l'une quelconque des revendications 1 à 5 dans laquelle Y représente un groupe urée de formule générale (II) : 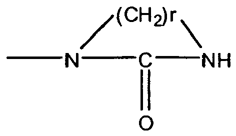 avec r un nombre entier ayant une valeur de 2 ou 3, p ayant une valeur de 0 et n ayant une valeur de 1, de préférence avec m ayant une valeur de 1, de préférence avec X représentant un groupe NH.

8. Composition bitumineuse selon l'une quelconque des revendications 1 à 5 dans laquelle Y représente un groupe amide -CONH-, de préférence avec m et p ayant une valeur de 1, de préférence avec X représentant un groupe NH.

9. Composition bitumineuse selon l'une quelconque des revendications 1 à 5 dans laquelle Y représente un groupe uréthane -OCONH-, de préférence avec m, n et p ayant une valeur de 1, de préférence avec X représentant un groupe NH.

10. Composition bitumineuse selon l'une quelconque des revendications 1 à 9 comprenant de 0,1 à 30% en masse de molécule organogélatrice de formule générale (1), de préférence de 0,5 à 20%, de préférence de 1 à 10%, de préférence de 2 à 5%.

11. Composition bitumineuse selon l'une quelconque des revendications 1 à 10 dans laquelle le bitume comprend en outre au moins un polymère et/ou un fluxant.

12. Utilisation d'une composition bitumineuse selon l'une quelconque des revendications 1 à 11 pour fabriquer un liant bitumineux anhydre ou sous forme d'émulsion, un bitume polymère, ou un bitume fluxé.

13. Utilisation d'au moins une molécule organogélatrice de formule générale (I) prise seule ou en mélange telle que définie dans les revendications 1 à 9 pour préparer des compositions bitumineuses élastiques réticulées de manière thermoréversible.

14. Procédé pour obtenir une composition bitumineuse selon l'une quelconque des revendications 1 à 11, dans lequel la molécule organogélatrice de formule générale (I) prise seule ou en mélange est introduite à chaud à des températures entre 70 et 220°C, de préférence entre 90 à 180°C, dans le bitume seul, dans le bitume polymère, dans le liant bitumineux sous forme anhydre ou sous forme d'émulsion, ou dans l'enrobé.

15. Procédé de préparation d'une composition bitumineuse selon l'une quelconque des revendications 1 à 11 dans lequel:
a) on introduit un bitume dans un récipient équipé de moyens de mélange, et on porte le bitume à une température entre 70 et 220°C, de préférence entre 90 et 180°C,
b) on introduit de 0,1 à 30 %, de préférence de 0,5 à 5 % en masse de molécule organogélatrice de formule générale (I) prise seule ou en mélange par rapport à la masse de bitume,
c) on chauffe la composition bitumineuse à une température comprise entre 70 et 220°C, de préférence entre 90 et 180°C, sous agitation, jusqu'à l'obtention d'une composition bitumineuse homogène.

## Claims

1. Bituminous composition comprising at least one bitumen and at least one organogelling molecule taken alone or in a mixture, said organogelling molecule being represented by the following general formula (I): 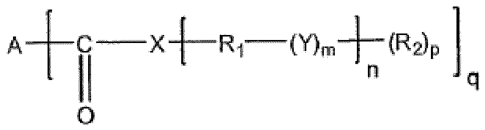 where:
- A represents an acyclic, cyclic or polycyclic, saturated or unsaturated, linear or branched hydrocarbon group of 3 to 92 carbon atoms, resulting from the polymerization of the side chains of at least one unsaturated fatty acid,
- X represents an NH group or an oxygen atom O;
- R₁ represents a group chosen from: a linear or branched hydrocarbon group of 2 to 40 carbon atoms, optionally comprising one or more heteroatoms and optionally comprising one or more unsaturations, or a substituted or unsubstituted aromatic group,
- R₂ represents a group chosen from: a hydrogen atom, a linear or branched hydrocarbon group of 1 to 40 carbon atoms, comprising one or more heteroatoms and optionally comprising one or more unsaturations, or a substituted or unsubstituted aromatic group,
- m and n represent independently of each other an integer that varies from 1 to 4,
- p represents an integer that varies from 0 to 4,
- q represents an integer that varies from 1 to 4 or a combination of these values,
- Y represents a group comprising a hydrogen bond donor such as the NH group and a hydrogen bond acceptor such as the C=O group.

2. Bituminous composition according to claim 1 in which Y represents a group chosen from the urea -NHCONH-, amide -NHCO-, urethane -OCONH- groups or urea of general formula (II): 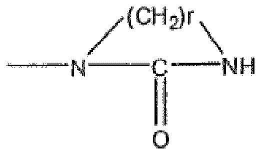 with r an integer having a value of 2 or 3 and p having a value of 0 and n having a value of 1.

3. Bituminous composition according to claim 1 or 2 in which the unsaturated fatty acids are unsaturated fatty acids of 4 to 24 carbon atoms (C₄ to C₂₄), preferably 11 to 22 carbon atoms (C₁₁ to C₂₂), preferably 16 to 18 carbon atoms (C₁₆ to C₁₈).

4. Bituminous composition according to any one of claims 1 to 3 in which the organogelling molecule of general formula (I) is in the form of a mixture comprising more than 70% organogelling molecules of general formula (I) with q = 2 and/or q=3.

5. Bituminous composition according to any one of claims 1 to 4 in which the R₁ and/or R₂ group represents an aromatic group substituted by alkyl groups and/or alkoxy groups.

6. Bituminous composition according to any one of claims 1 to 5 in which Y represents a urea -NHCONH- group, preferably with n having a value of 1, m and p having a value of 1 or m and p having a value of 2.

7. Bituminous composition according to any one of claims 1 to 5 in which Y represents a urea group of general formula (II): 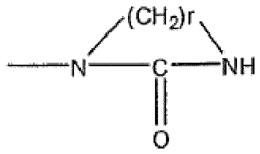 with r an integer having a value of 2 or 3, p having a value of 0 and n having a value of 1, preferably with m having a value of 1, preferably with X representing an NH group.

8. Bituminous composition according to any one of claims 1 to 5 in which Y represents an amide -CONH- group, preferably with m and p having a value of 1, preferably with X representing an NH group.

9. Bituminous composition according to any one of claims 1 to 5 in which Y represents a urethane -OCONH- group, preferably with m, n and p having a value of 1, preferably with X representing an NH group.

10. Bituminous composition according to any one of claims 1 to 9 comprising 0.1 to 30% by mass organogelling molecule of general formula (I), preferably 0.5 to 20%, preferably 1 to 10%, preferably 2 to 5%.

11. Composition according to any one of claims 1 to 10, **characterized in that** the bitumen also comprises at least one polymer and/or one fluxing agent.

12. Use of a bituminous composition according to any one of claims 1 to 11 for manufacturing an anhydrous or emulsified bituminous binder, a polymeric bitumen or a fluxed bitumen.

13. Use of at least one organogelling molecule of general formula (I) taken alone or in a mixture as defined in claims 1 to 9 for preparing thermoreversibly crosslinked elastic bituminous compositions.

14. Process for obtaining a bituminous composition according to any one of claims 1 to 11, in which the organogelling molecule of general formula (I) taken alone or in a mixture is introduced hot, at temperatures between 70 and 220°C, preferably between 90 to 180°C, into the bitumen alone, into the polymeric bitumen, into the anhydrous or emulsified bituminous binder, or into the bituminous mixture.

15. Process for preparing a bituminous composition according to any one of claims 1 to 11 in which:
a) a bitumen is introduced into a receiving vessel equipped with mixing means, and the bitumen is heated to a temperature between 70 and 220°C, preferably between 90 and 180°C,
b) 0.1 to 30 %, preferably 0.5 to 5 % by mass organogelling molecule of general formula (I) taken alone or in a mixture relative to the mass of bitumen is introduced,
c) the bituminous composition is heated at a temperature comprised between 70 and 220°C, preferably between 90 and 180°C, under stirring, until a homogeneous bituminous composition is obtained.

## Patentansprüche

1. Bitumenzusammensetzung, die mindestens ein Bitumen und mindestens einen Organogelatorstoff für sich genommen oder in Mischung umfasst, wobei der Organogelatorstoff der folgenden allgemeinen Formel (I) entspricht: 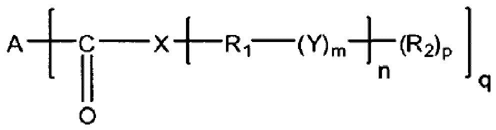 wobei:
- A für eine geradkettige oder verzweigte, gesättigte oder ungesättigte, azyklische, zyklische oder polyzyklische Kohlenwasserstoffgruppe mit 3 bis 92 Kohlenstoffatomen steht, die bei der Polymerisation von Seitenketten mindestens einer ungesättigten Fettsäure entsteht,
- X für eine NH-Gruppe oder ein Sauerstoffatom O steht,
- R₁ für eine Gruppe steht, ausgewählt aus: einer geradkettigen oder verzweigten Kohlenwasserstoffgruppe mit 2 bis 40 Kohlenstoffatomen, die möglicherweise ein oder mehrere Heteroatome umfasst und möglicherweise eine oder mehrere ungesättigte Stellen umfasst, oder einer aromatischen Gruppe, die substituiert oder unsubstituiert ist,
- R₂ für eine Gruppe steht, ausgewählt aus: einem Wasserstoffatom, einer geradkettigen oder verzweigten Kohlenwasserstoffgruppe mit 1 bis 40 Kohlenstoffatomen, die ein oder mehrere Heteroatome umfasst und möglicherweise eine oder mehrere ungesättigte Stellen umfasst, oder einer aromatischen Gruppe, die substituiert oder unsubstituiert ist,
- m und n unabhängig voneinander für eine ganze Zahl stehen, die Werte von 1 bis 4 annehmen kann,
- p für eine ganze Zahl steht, die Werte von 0 bis 4 annehmen kann,
- q für eine ganze Zahl steht, die Werte von 1 bis 4 annehmen kann, oder für eine Kombination dieser Werte,
- Y für eine Gruppe steht, die einen Wasserstoffbindungsdonator wie etwa die NH-Gruppe und einen Wasserstoffbindungsakzeptor wie etwa die C=O-Gruppe umfasst.

2. Bitumenzusammensetzung nach Anspruch 1, wobei Y für eine Gruppe steht, die aus den Gruppen Harnstoff -NHCONH-, Amid -NHCO-, Urethan -OCONH- oder Harnstoff nach der allgemeinen Formel (II) ausgewählt ist: 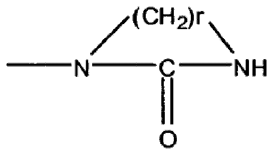 wobei r eine ganze Zahl mit einem Wert von 2 oder 3 ist und p einen Wert von 0 hat und n einen Wert von 1 hat.

3. Bitumenzusammensetzung nach Anspruch 1 oder 2, wobei es sich bei den ungesättigten Fettsäuren um ungesättigte Fettsäuren mit 4 bis 24 Kohlenstoffatomen (C₄ bis C₂₄), vorzugsweise mit 11 bis 22 Kohlenstoffatomen (C₁₁ bis C₂₂), vorzugsweise mit 16 bis 18 Kohlenstoffatomen (C₁₆ bis C₁₈) handelt.

4. Bitumenzusammensetzung nach einem beliebigen der Ansprüche 1 bis 3, wobei der Organogelatorstoff nach der allgemeinen Formel (I) in Form einer Mischung vorliegt, bei welcher Organogelatorstoffe nach der allgemeinen Formel (I), bei denen q = 2 und/oder q = 3 ist, mehr als 70 % ausmachen.

5. Bitumenzusammensetzung nach einem beliebigen der Ansprüche 1 bis 4, wobei die Gruppe R₁ und/oder R₂ für eine aromatische Gruppe steht, die mit Alkylgruppen und/oder mit Alkoxygruppen substituiert ist.

6. Bitumenzusammensetzung nach einem beliebigen der Ansprüche 1 bis 5, wobei Y für eine Harnstoffgruppe -NHCONH- steht, wobei n vorzugsweise einen Wert von 1 hat, m und p einen Wert von 1 haben oder m und p einen Wert von 2 haben.

7. Bitumenzusammensetzung nach einem beliebigen der Ansprüche 1 bis 5, wobei Y für eine Harnstoffgruppe nach der allgemeinen Formel (II) steht: 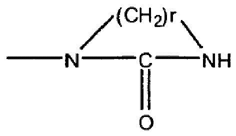 wobei r eine ganze Zahl ist, die einen Wert von 2 oder 3 hat, p einen Wert von 0 hat und n einen Wert von 1 hat, wobei vorzugsweise m einen Wert von 1 hat, wobei vorzugsweise X für eine NH-Gruppe steht.

8. Bitumenzusammensetzung nach einem beliebigen der Ansprüche 1 bis 5, wobei Y für eine Amidgruppe -CONH- steht, wobei m und p vorzugsweise einen Wert von 1 haben, wobei vorzugsweise X für eine NH-Gruppe steht.

9. Bitumenzusammensetzung nach einem beliebigen der Ansprüche 1 bis 5, wobei Y für eine Urethangruppe -OCONH- steht, wobei m, n und p vorzugsweise einen Wert von 1 haben, wobei vorzugsweise X für eine NH-Gruppe steht.

10. Bitumenzusammensetzung nach einem beliebigen der Ansprüche 1 bis 9, welche 0,1 bis 30 Gewichts-% des Organogelatorstoffs nach der allgemeinen Formel (I) umfasst, vorzugsweise 0,5 bis 20 %, vorzugsweise 1 bis 10 %, vorzugsweise 2 bis 5 %.

11. Bitumenzusammensetzung nach einem beliebigen der Ansprüche 1 bis 10, wobei das Bitumen darüber hinaus mindestens ein Polymer und/oder ein Fluxmittel enthält.

12. Verwendung einer Bitumenzusammensetzung nach einem beliebigen der Ansprüche 1 bis 11, um ein bituminöses Bindemittel, das wasserfrei ist oder in Emulsionsform vorliegt, ein Polymerbitumen oder ein Fluxbitumen herzustellen.

13. Verwendung mindestens eines Organogelatorstoffs nach der allgemeinen Formel (I), für sich genommen oder in Mischung, gemäß der Begriffsbestimmung in den Ansprüchen 1 bis 9, um elastische, thermoreversibel vernetzte Bitumenzusammensetzungen herzustellen.

14. Verfahren zur Herstellung einer Bitumenzusammensetzung nach einem beliebigen der Ansprüche 1 bis 11, wobei der Organogelatorstoff nach der allgemeinen Formel (I), für sich genommen oder in Mischung, dem Bitumen an sich, dem Polymerbitumen, dem bituminösen Bindemittel, das wasserfrei ist oder in Emulsionsform vorliegt, oder dem Schwarzdeckenmischgut in heißem Zustand bei Temperaturen zwischen 70 und 220 °C, vorzugsweise zwischen 90 und 180 °C zugesetzt wird.

15. Verfahren zur Herstellung einer Bitumenzusammensetzung gemäß einem beliebigen der Ansprüche 1 bis 11, wobei:
a) ein Bitumen in einen Behälter gegeben wird, der mit Mischmitteln ausgestattet ist, und das Bitumen auf eine Temperatur zwischen 70 und 220 °C, vorzugsweise zwischen 90 und 180 °C, gebracht wird,
b) 0,1 bis 30 %, vorzugsweise 0,5 bis 5 Gewichts-% des Organogelatorstoffs nach der allgemeinen Formel (I), für sich genommen oder in Mischung, zugesetzt werden, unter Bezugnahme auf das Bitumengewicht,
c) die Bitumenzusammensetzung, unter Rühren solange auf eine Temperatur im Bereich von 70 bis 220 °C, vorzugsweise von 90 bis 180 °C erhitzt wird, bis eine homogene Bitumenzusammensetzung erzielt wird.
